# EUROPÄISCHE PATENTSCHRIFT

(11) **EP 2 735 412 B1**
(45) Veröffentlichungstag und Bekanntmachung des Hinweises auf die Patenterteilung: **09.03.2016**
(21) Anmeldenummer: 12193550.6
(22) Anmeldetag: 21.11.2012
(51) Int. Cl.: B28B 3/26, B30B 11/22, B29C 47/00, B29C 47/08

(54) **Mundstück**
Extrusion die
Filière d'extrusion

(43) Veröffentlichungstag der Anmeldung: 28.05.2014
(73) Patentinhaber: HÄNDLE GmbH Maschinen und Anlagenbau, 75417 Mühlacker (DE)
(72) Erfinder: Berger, Harald, 88690 Uhldingen-Mühlhofen (DE)
(74) Vertreter: Riedel, Peter

(56) Entgegenhaltungen:
- EP-A1- 2 230 057
- DE-C- 221 289
- JP-A- 2000 176 920
- US-A- 1 725 959

## Beschreibung

Die Erfindung bezieht sich auf ein Mundstück zur Herstellung eines Formlings aus einer keramischen Masse im Strangpressverfahren nach dem Oberbegriff des Patentanspruches 1.

Aus der EP 19850104917 sind solche Mundstücke zu entnehmen. Üblicherweise werden dabei die Haltestangen, an deren freien Ende die Kerne zur Ausformung der Wabenstruktur oder Hohlräume in dem fertig gepressten Formling eingearbeitet sind, an die Halteplatte angeschweißt. Durch die Schweißnaht wird zwar eine verdrehsichere und dauerhafte Befestigung der jeweiligen Haltestange an der Halteplatte erzielt, jedoch können nachteiligerweise die Haltestangen nicht vereinzelt von der Halteplatte entfernt werden, wenn diese beispielsweise verschlissen sind.

Des Weiteren ist bei der Schweißverbindung zwischen der Haltestange und der Halteplatte als nachteilig anzusehen, dass die Haltestange und die Halteplatte eine Werkstoff-Paarung aufzuwiegen haben, die für das Schweißen geeignet ist. Solche Werkstoff-Paarungen sind insbesondere Stahl-Stahl. Bei dem Anschweißen der Haltestange an der Halteplatte entsteht Hitze, die zu einer Materialverformung führen kann, so dass die Haltestange und/oder die Halteplatte verzogen ist, wodurch die geometrischen Vorgaben zur Positionierung der Haltestange nicht eingehalten sind. Folglich sind Nachbearbeitungsschritte zur Korrektur dieses Herstellungsfehlers erforderlich.

Die DE 221 289 C zeigt ein Mundstück zur Herstellung eines Formlings aus einer keramischen Masse im Strangpressverfahren, mit einer Vielzahl von in diesem vorgesehenen Hohlräumen, gemäß dem Oberbegriff des Anspruchs 1 und insbesondere eine Vorrichtung an Strangpressenmundstücken zum Erzeugen enggelochter Mauerziegel. An einem Halterahmen sind Haltebänder oder alternativ Haltedrähte festgelegt, an denen Haltestangen mit Kernen befestigt sind.

Die JP 2000-176920 A zeigt ein Mundstück zur Herstellung eines Formlings im Strangpressverfahren. Haltestangen sind an einer Halteplatte festgeschraubt.

Die EP 2 230 057 A1 zeigt ein Mundstück zur Herstellung eines Hochlochziegelstranges im Extrudierverfahren. An einem Gestell sind drehfest Haltestangen angebracht.

Es ist daher Aufgabe der Erfindung ein Mundstück der eingangs genannten Gattung zur Verfügung zu stellen, das aus einer Halteplatte besteht, an der vereinzelt lösbare Haltestangen angebracht werden können. Dabei sollen die Haltestangen, die aus unterschiedlichen Werkstoffen gebildet sein können, zum Einsatz gelangen, ohne dass dabei die lageorientierte Befestigung zwischen der Haltestange und der Halteplatte verloren geht.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass die Haltestange mittels einer Gewindeschraube in einer Durchgangsöffnung, die in ein in die Halteplatte eingearbeitetes Innengewinde eingedreht ist, kann die Haltestange zunächst aus einem beliebigen Werkstoff, beispielsweise aus einem metallischen oder keramischen Werkstoff, gefertigt sein, denn die Werkstoff-Paarung zwischen der Haltestange und der Halteplatte ist für die Befestigung der Haltestange unerheblich.

Darüber hinaus kann die jeweilige Haltestange individuell von der Halteplatte gelöst werden und durch eine andere Haltestange ersetzt werden, wenn diese beispielsweise verschlissen ist oder wenn die Werkstoff-Paarung auszutauschen ist.

Es hat sich nämlich seit langem herausgestellt, dass die Haltestangen bei dem Durchpressen der keramischen Massen nicht nur aufgrund der hohen Reibung zwischen der Haltestange und den keramischen Massen verschlissen werden, sondern auch dass die Haltestangen durch die keramischen Massen aus ihrer vorgegebenen Position gedrückt sind. Demnach ist es oftmals erforderlich, möglichst biegesteife Werkstoffe zu verwenden, um solche Druckkräfte aufzunehmen und den Materialverschleiß an der Haltestange aufgrund dieser aus Reibung entstehenden Abnutzungen möglichst gering zu halten. Daher ist es besonders zweckmäßig, wenn Haltestangen aus einem keramischen Werkstoff verwendet werden können. Solche Materialien sind jedoch nicht geeignet, diese mittels einer Schweißnaht an der Halteplatte zu befestigen.

Desweiteren sollen Haltestangen verwendet werden können, die unterschiedliche Längenabmessungen aufweisen, um eine optimale Ausrichtung der Haltestangen und der an diesen angebrachten Kerne zu erreichen, denn je länger die Haltestangen sind, desto größer ist die Gefahr, dass diese aus ihrer vorgegebenen Position beim Pressvorgang herausgedrückt werden. Wenn die Haltestangen jedoch zu kurz bemessen sind, dann weist die keramische Masse vor dem Durchtritt zwischen den jeweiligen benachbart zueinander angeordneten Kernen keine homogene bzw. keine ausreichend homogene Struktur auf.

Da es erforderlich ist, die an dem jeweiligen Ende der Haltestange angebrachten Kerne lageorientiert während des Strangpressverfahrens zu halten, um eine vorgegebene Wabenstruktur in dem fertig gepressten Formling zu erreichen, ist es erforderlich, die Haltestange lageorientiert mit der Halteplatte zu verbinden. Zu diesem Zweck ist in die Haltestange eine Bohrung eingearbeitet, die senkrecht zu der Strömungsrichtung bzw. der Längsachse der Haltestange verläuft und in die ein Zylinderstift eingeschoben ist. Der Zylinderstift ragt auf beiden Seiten der Haltestange aus dieser hinaus und ist in eine in die Halteplatte eingearbeitete Nut oder Kerbe eingesetzt. Die Außenkontur der Nut entspricht dabei der geometrischen Abmessung des Zylinderstiftes, so dass dieser in der Nut anliegt und verdrehsicher in dieser gehalten ist. Folglich ist jede der Haltestangen exakt lageorientiert an der Halteplatte befestigt, da die Verbindung zwischen dem Zylinderstift und der Nut zum einen eine Zentrierung der Haltestange und zum anderen eine Verdrehsicherung ermöglicht, so dass die Position und Ausrichtung des jeweiligen Kernes an der Haltestange während des Strangpressverfahrens nicht verändert ist.

In der in der Halteplatte eingearbeitet Durchgangsöffnung ist eine Anlagefläche vorgesehen, die senkrecht zu der Längsachse der Haltestange ausgerichtet ist. Die Haltestange liegt mit ihrem freien Ende im montierten Zustand an der Anlagefläche an, so dass beim Eindrehen der Gewindeschraube in das Innengewinde der Haltestange zwischen der Haltestange und der Anlagefläche eine Anpresskraft entsteht, durch die die Haltestange an die Anlagefläche der Halteplatte angedrückt ist.

In der Zeichnung ist ein Mundstück der erfindungsgemäßen Art dargestellt, das nachfolgend näher erläutert ist. Im Einzelnen zeigt:
- Figur 1: ein in einem Presskanal einer Strangpresse eingebauten Mundstück, bestehend aus einem mit dem Presskanal fest verbundenen Vorsetzplatte und aus einer an der Vorsetzplatte arretierten Halteplatte an der eine Vielzahl von Haltestangen, an deren freien Ende ein Kern zur Einformung von Hohlräumen in eine keramische Masse vorgesehen ist, angeordnet ist, im Schnitt,
- Figur 2: eine der Haltestangen mit einer ersten Verdrehsicherung gemäß Figur 1, die mittels einer Gewindeschraube lösbar an der Halteplatte angebracht sind, in zwei senkrecht zueinander verlaufenden Schnittdarstellungen,
- Figur 3: eine der Haltestangen gemäß Figur 2, im eingebauten Zustand sowie in vergrößerter Darstellung,
- Figur 4: eine der Haltestangen mit einer zweiten Verdrehsicherung gemäß Figur 1, die mittels einer Gewindeschraube lösbar an der Halteplatte angebracht sind, in zwei senkrecht zueinander verlaufenden Schnittdarstellungen,
- Figur 5: eine der Haltestangen mit einer dritten Verdrehsicherung gemäß Figur 1, die mittels einer Gewindeschraube lösbar an der Halteplatte angebracht sind, in zwei senkrecht zueinander verlaufenden Schnittdarstellungen und
- Figur 6: eine der Haltestangen mit einer vierten Verdrehsicherung gemäß Figur 1, die mittels einer Gewindeschraube lösbar an der Halteplatte angebracht sind, in zwei senkrecht zueinander verlaufenden Schnittdarstellungen.

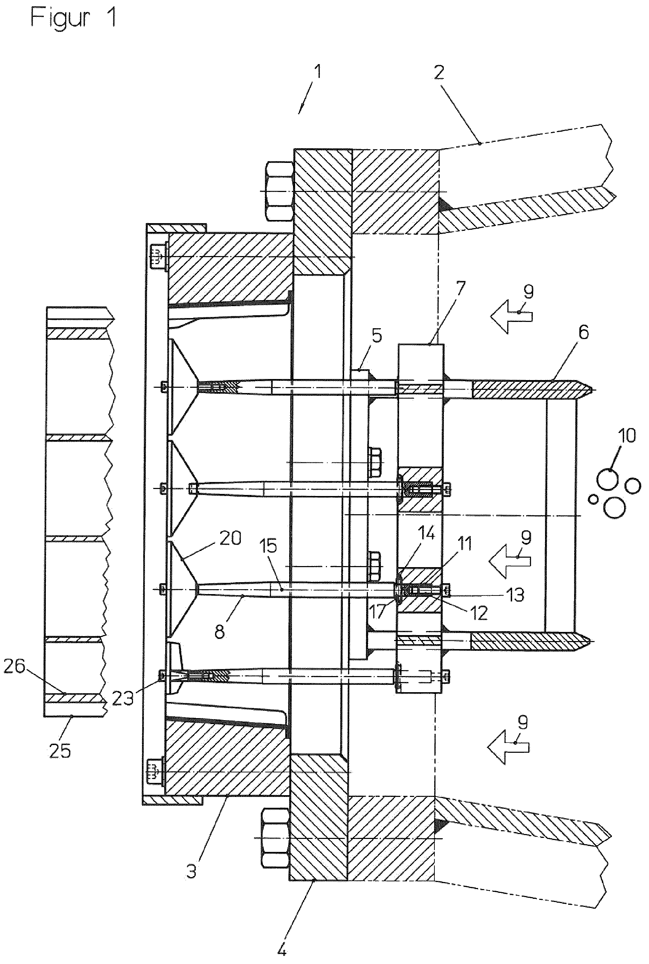

Figur 1 ist ein Mundstück 1 zu entnehmen, das in einem Presskanal 2 einer nicht dargestellten Strangpresse eingebaut ist. Durch den Presskanal 2 ist durch eine der Strangpresse zugeordnete Förderschnecke eine homogene keramische Masse 10 gefördert, die durch das Mundstück 1 durch die Förderschnecke hindurchgedrückt ist, um einen Formling 25 im Strangpressverfahren zu formen, in dem eine Vielzahl von Hohlräumen 26 im fertig gepressten Zustand vorgesehen sind, die eine Wabenstruktur bilden. Solche Formlinge 25 werden anschließend erhitzt und als Ziegelsteine verwendet.

Das Mundstück 1 besteht aus einer in dem Presskanal 2 eingebauten Vorsetzplatte 4, an der ein Anschraubfuss 5 vorgesehen ist, an dem mittels Verschweißung ein Hauptbügel 6 angebracht ist. Durch den Hauptbügel 6 wird eine Halteplatte 7 abgestützt, die an dem Hauptbügel 6 mittels Schweißnähten befestigt ist. Die Halteplatte 7 weist dabei eine Vielzahl von quer und längs zu der mit der Bezugsziffer 9 gekennzeichneten Strömungsrichtung ausgerichteten Stegen auf, die jeweils in einen Knotenpunkt zusammenlaufen. Somit ist zwischen den Stegen eine Durchgangsöffnung geschaffen, durch die die keramische Masse 10 hindurchgedrückt ist. In dem jeweiligen Knotenpunkt der Halteplatte 7 ist eine Durchgangsöffnung 11 eingearbeitet, in die jeweils eine Haltestange 8 eingesetzt ist. Die Haltestangen 8 verlaufen parallel zueinander und parallel zu der Strömungsrichtung 9. An dem von der Halteplatte 7 abgewandten freien Ende 18 der Haltestange 8 ist jeweils ein Kern 20 aufgesteckt, durch den in die keramische Masse 10 der jeweilige Hohlraum 26 in dem Formling 25 eingeformt ist.

Der Abstand zwischen den Kernen 20 und der Halteplatte 7 ist dabei derart zu bemessen, dass die keramische Masse 10 nach dem Durchtritt durch die Halteplatte 7 zum einen eine homogene Struktur einnehmen kann und zum anderen, dass die Auslenkung der jeweiligen Haltestange 8 aufgrund der vorherrschenden Drücke beim Hindurchpressen der keramischen Masse 10 aus der vorgegebenen Position nicht ausgelenkt wird. Diese geometrischen Verhältnisse sind an die verwendete keramische Masse 10, die verschiedenartige Strukturen aufweisen, und an die vorherrschenden Druckzustände anzupassen.

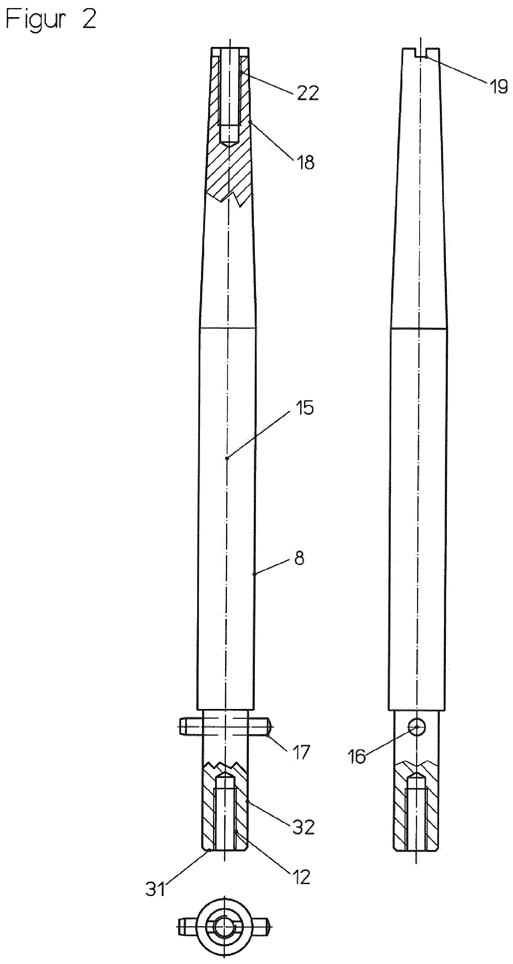

Insbesondere aus der Figur 2 ist ersichtlich, dass in die jeweilige Haltestange 8 an der der Halteplatte 7 zugewandten Stirnseite 18 ein Innengewinde 12 eingearbeitet ist. Das freie Ende 18 der Haltestange 8, das in die Durchgangsöffnung 11 der Halteplatte 7 eingesetzt ist, liegt dabei im montierten Zustand an einer umlaufenden Anlagefläche 31 der Durchgangsöffnung 11 an. Die Anlagefläche 31 verläuft demnach senkrecht zu der Strömungsrichtung 9 bzw. der Längsachse 15 der Haltestangen 8. Mit Hilfe einer in die Durchgangsöffnung 11 eingesetzten Gewindeschraube 13 wird demnach die jeweilige Haltestange 8 in Richtung der Anlagefläche 31 angedrückt, so dass das freie Ende 32 der Haltestange 8 an dieser im montierten Zustand angepresst ist.

Aufgrund der Verschraubung zwischen der Haltestange 8 und der Halteplatte 7 können die Haltestangen 8 individuell, also vereinzelt, von der Halteplatte 7 entfernt bzw. an dieser montiert werden. Darüber hinaus ist die Werkstoff-Paarung zwischen der Halteplatte 7 und der jeweiligen Haltestange 8 unbeeinflusst von der Befestigungsart, da die Verschraubung der Haltestange 8 an der Halteplatte 7 jede Material-Paarung zulässt. Somit kann die Haltestange 8 beispielsweise aus einem keramischen oder metallischen Werkstoff gefertigt sein und auch die Halteplatte 7 kann aus einem dieser Werkstoffe bestehen.

Um die Haltestange 8 verdrehsicher an der Halteplatte 7 zu befestigen, ist in die Haltestange 8 eine Bohrung 16 eingearbeitet, die senkrecht zu der Strömungsrichtung 9 bzw. der Längsachse 15 der Haltestange 8 verläuft. In die Bohrung 16 ist ein Zylinderstift 17 eingesetzt, der aus den beiden gegenüberliegenden Mantelflächen der Haltestange 8 übersteht.

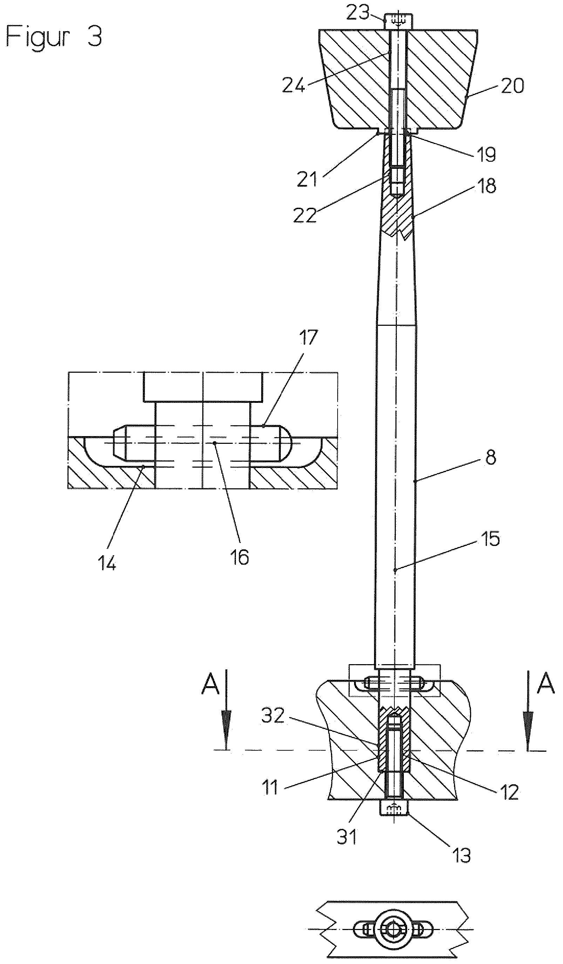

Aus Figur 3 ist ersichtlich, dass in die Halteplatte 7 im Bereich der jeweiligen Haltestange 8 eine Nut 14 eingearbeitet ist, in die im montierten Zustand der Zylinderstift 17 eintaucht. Dabei ist der Außendurchmesser des Zylinderstiftes 17 an die Innenkontur der Nut 14 derart angepasst, dass der Zylinderstift 17 spielfrei in der Nut 14 einsetzbar ist. Sobald daher die Gewindeschraube 13 in das Innengewinde 12 der Haltestange 8 eingedreht ist, wird zum einen die Haltstange 8 an die Anlagefläche 31 der Durchgangsöffnung 11 angepresst und zum anderen taucht der Zylinderstift 17 in die Nut 14 ein, wodurch einerseits eine Zentrierung der Haltestange 8 bezogen auf die Halteplatte 7 erreicht ist, und andererseits eine Verdrehsicherung zwischen der Haltestange 8 und der Halteplatte 7 geschaffen ist. Durch die Ausrichtung der Bohrung 16 zu dem von der Haltplatte 7 abstehenden freien Ende 18 der Haltestange 8 kann nämlich die Ausrichtung des jeweiligen Kernes 20 an der Haltestange 8 vorgegeben werden. Zu diesem Zweck ist in das freie Ende 18 eine Nut 19 eingearbeitet, in die eine an dem Kern 20 angeformte Nase 21 eingesetzt ist. Desweiteren ist in dem Kern 20 eine Durchgangsöffnung 24 eingearbeitet, in die eine Gewindeschraube 23 einsetzbar ist, die in einem in dem freien Ende 18 der Haltestange 8 eingearbeiteten Innengewinde 22 eingedreht ist, so dass der Kern 20 lageorientiert und verdrehsicher mit der Haltestange 8 verschraubt ist. Durch die exakte Ausrichtung der Haltestange 8 mit Hilfe der in diesem eingearbeiteten Bohrung 16 und des Zylinderstiftes 17 kann demnach eine vorgegeben Ausrichtung des Kernes 20 erreicht werden, wodurch die Wabenstruktur des Formlings 25 erzeugt ist.

Die Kerne 20 sollen möglichst in einer gemeinsamen Ebene angeordnet sein, so dass die Längen der Haltestangen 8 derart auszuwählen sind, dass durch diese mögliche Fehlertoleranzen bei der Herstellung und Montage der Halteplatte 7 ausgeglichen sind. Folglich können unterschiedlich lang bemessene Haltestangen 8 an die Halteplatte 7 angeschraubt werden, um solche Herstellungsfehler oder Montageabweichungen bei der Fertigung der Halteplatte 7 bzw. deren Einbau in den Presskanal 2 auszugleichen. Darüberhinaus können die Haltestangen 8 bei Verschleiß vereinzelt ausgetauscht werden, da jede der Haltestangen 8 individuell mit Hilfe der Gewindeschraube 13 an der Halteplatte 7 befestigt ist.

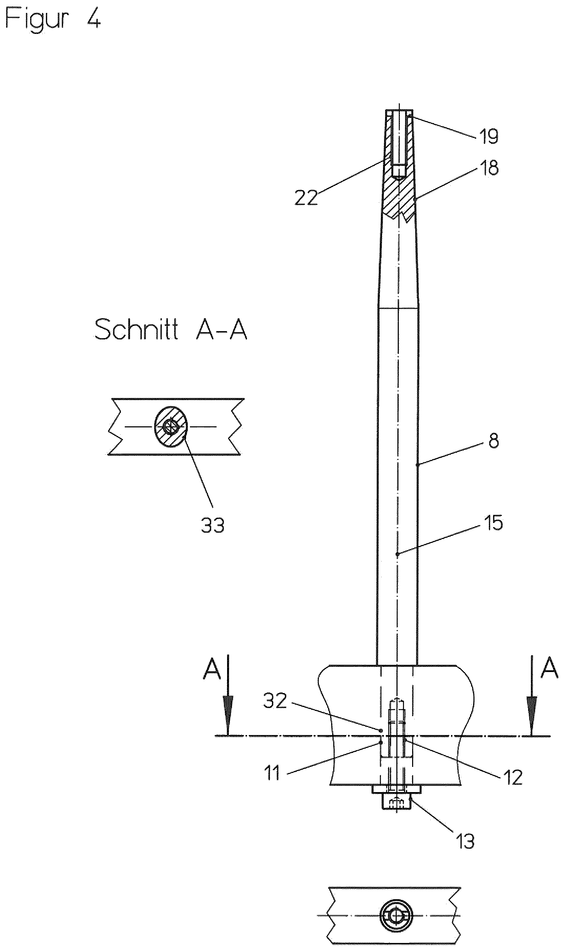

In den Figuren 4, 5 und 6 sind drei weitere Alternativen für die konstruktive Ausgestaltung der Verdrehsicherung gemäß den Figuren 1 und 2 zu entnehmen. In Figur 4 besteht die Verdrehsicherung aus einem elliptischen Querschnitt 33 der Haltestangen 8, der im Bereich der Durchgangsöffnung 11 der Halteplatte 7 eingesetzt ist. Die Innenkontur der Durchgangsöffnung 11 ist dabei an die Außenkontur des elliptischen Querschnitts 33 der Haltestangen 8 angepasst, so dass der elliptische Querschnitt 33 spielfrei in die Durchgangsöffnung 11 eintaucht. Aufgrund des elliptischen Querschnitts 33 kann die Haltestange 8 nicht in der Durchgangsöffnung 11 verdreht werden, sondern wird vielmehr passgenau eingesetzt, so dass das freie Ende 18 der Haltestangen 8, auf den der Kern 20 aufgesetzt ist, derart ausgerichtet ist, dass die Position des Kernes 20 bezogen auf die Haltestange 8 und die Halteplatte 7 exakt vorgegeben ist.

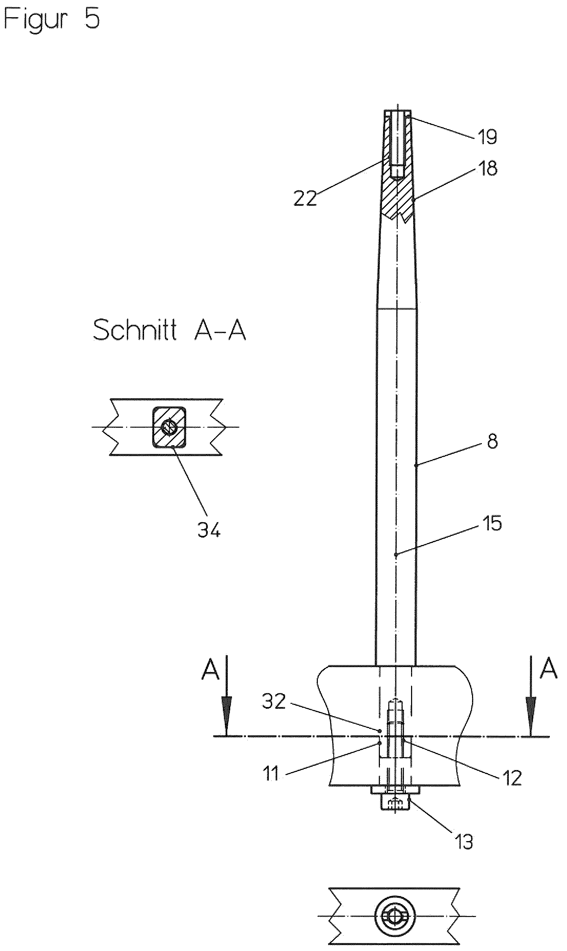

Aus Figur 5 ist ersichtlich, dass der in die Durchgangsöffnung 11 einzusetzende Teilbereich der Haltestangen 8 aus einem quadratischen Querschnitt 34 gebildet ist. Die Mantelflächen des quadratisch förmigen Querschnitts 34 liegen dabei an den Seitenwänden der Durchgangsöffnung 11 spielfrei an und dienen als Zentrierflächen, durch die die Position der Haltestangen 8 in der Halteplatte 7 exakt vorgegeben und ausgerichtet ist.

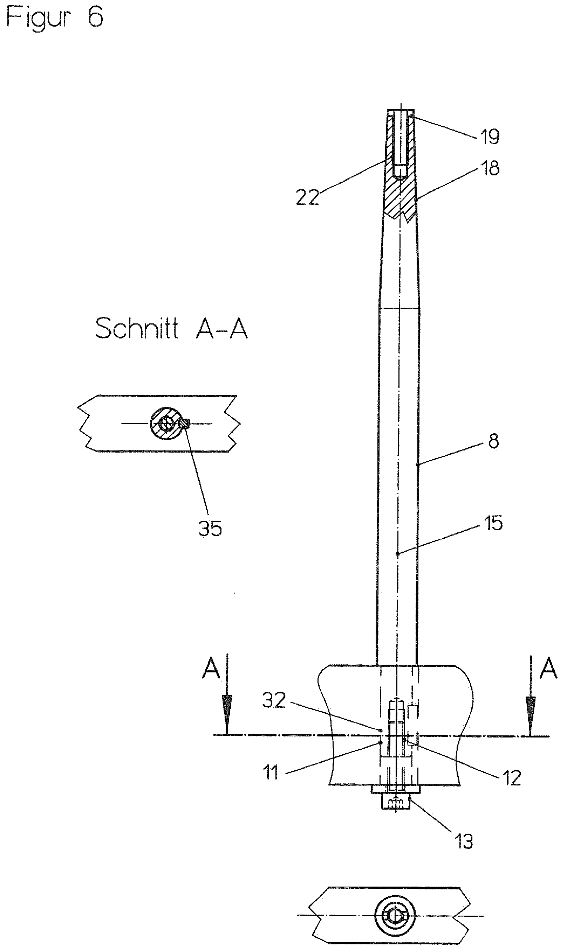

In Figur 6 ist die Verdrehsicherung als Feder-Nut-Paarung 35 ausgestaltet. In die Haltestange 8 ist im Bereich der Durchgangsöffnung 11 eine Nut eingearbeitet, in die eine Feder, beispielsweise in Form eines quadratischen Stiftes, eingesetzt ist. Folglich verbindet die Feder die Haltestange 8 kraftschlüssig mit der Halteplatte 7, da die Feder sowohl in der Haltestange 8 als auch in der Halteplatte 7 fest anliegt.

## Patentansprüche

1. Mundstück (1) zur Herstellung eines Formlings (25) aus einer keramischen Masse (10) im Strangpressverfahren, mit einer Vielzahl von in diesem vorgesehenen Hohlräumen (26), bestehend aus
- einer in einem Presskanal (2) eingesetzten Vorsetzplatte (4),
- einer an der Vorsetzplatte (4) befestigten Halteplatte (7) und
- einer Vielzahl an der Halteplatte (7) angebrachten Haltestangen (8), an deren jeweiligem freien Ende (18) ein Kern (20) zur Erzeugung der Hohlräume (26) in dem Formling (25) angeordnet ist,
wobei die jeweilige Haltestange (8) an der Halteplatte (7) mittels einer Schraubverbindung (12, 13) arretiert ist und an der jeweiligen Haltestange (8) eine Verdrehsicherungseinrichtung (14, 16, 17, 33, 34, 35) vorgesehen ist, durch die die Haltestange (8) im montierten Zustand drehfest an der Halteplatte (7) festgesetzt ist,
**dadurch gekennzeichnet,**
**dass** an dem freien Ende (18) der jeweiligen Haltestange (8) eine Nut (19) eingearbeitet ist,
**dass** an einem Kern (20) eine Nase (21) angeformt ist, deren Außenkontur mit der Innenkontur der Nut (19) korrespondiert, und
**dass** im montierten Zustand der Kern (20) mit der Nase (21) in die Nut (19) eingesetzt ist und dort rotationsfest gehalten ist.

2. Mundstück (1) nach Anspruch 1,
**dadurch gekennzeichnet, dass** in die jeweilige Haltestange (8) ein Innengewinde (12) eingearbeitet ist, dass in der Halteplatte (7) eine Vielzahl von Durchgangsöffnungen (11) zur Aufnahme der Haltestangen (8) vorgesehen sind und dass in die Durchgangsöffnungen (11) jeweils eine Gewindeschraube (13) eingesetzt ist, die in das Innengewinde (12) der Haltestange (8) eingedreht ist.

3. Mundstück (1) nach Anspruch 2,
**dadurch gekennzeichnet, dass** die in die Halteplatte (7) eingearbeitete Durchgangsöffnung (12) eine ringförmig umlaufende Anlagefläche (31) aufweist, die senkrecht zu der Strömungsrichtung (9) der keramischen Masse (10) ausgerichtet ist, dass das freie Ende (32) der jeweiligen Haltestange (8) im montierten Zustand an der Anlagefläche (31) der Durchgangsöffnung (11) anliegt, und dass die Haltestange (8) durch die eingedrehte Gewindeschraube (13) gegen die Anlagefläche (31) gepresst ist.

4. Mundstück (1) nach einem der vorgenannten Ansprüche,
**dadurch gekennzeichnet, dass** in jede der Haltestangen (8) eine senkrecht zu der Längsachse (15) der Haltestange (8) verlaufende Bohrung (16) eingearbeitet ist und dass in jede Bohrung (16) ein Zylinderstift (17) eingesetzt ist, der im montierten Zustand in einer in der Halteplatte (7) eingearbeiteten Nut (14) eintaucht und dort drehfest gehalten ist.

5. Mundstück (1) nach einem der Ansprüche 2 bis 3,
**dadurch gekennzeichnet, dass** der in die Durchgangsöffnung (11) einzusetzende Bereich der Haltestange (8) einen elliptisch ausgestalteten Querschnitt (33) aufweist, dass die Innenkontur der Durchgangsöffnung (11) an die Außenkontur des Teilbereichs des elliptischen Querschnitts (33) der Haltestangen (8) angepasst ist und dass der elliptische Querschnitt (33) der Haltestangen (8) spielfrei in die Durchgangsöffnung (11) eingesetzt ist.

6. Mundstück (1) nach einem der Ansprüche 2 bis 3,
**dadurch gekennzeichnet, dass** der in die Durchgangsöffnung (11) einzusetzende Teilbereich der Haltestange (8) einen quadratischen Querschnitt (34) aufweist, dass die Innenkontur der Durchgangsöffnung (11) an die Außenkontur des Teilbereichs des quadratischen Querschnitts (34) der Haltestangen (8) angepasst ist und dass der quadratische Querschnitt (34) der Haltestangen (8) spielfrei in die Durchgangsöffnung (11) eingesetzt ist.

7. Mundstück (1) nach einem der Ansprüche 2 bis 3,
**dadurch gekennzeichnet, dass** in den in die Durchgangsöffnung (11) einzusetzenden Teilbereich der Haltestange (8) eine Nut, die parallel zu der Längsachse (15) der Haltestange (8) verläuft, eingearbeitet ist, dass in die Innenwand der Durchgangsöffnung (11) eine Nut eingearbeitet ist, dass in die Nuten der Haltestangen (8) und der Durchgangsöffnung (11) eine Feder, beispielsweise in Form eines quadratischen Stiftes, eingesetzt ist und dass die Haltestange (8) mittels der Nut-Feder-Paarung (35) kraftschlüssig und zentriert in der Durchgangsöffnung (11) angebracht ist.

8. Mundstück (1) nach Anspruch 1,
**dadurch gekennzeichnet, dass** der jeweilige Kern (20) eine Durchgangsöffnung (24) aufweist, dass in das freie Ende (18) der Haltestange (8) ein Innengewinde (22) eingearbeitet ist und dass die Durchgangsöffnung (24) des Kernes (20) von einer Gewindeschraube (23) durchgriffen ist, die in dem Innengewinde (22) der Haltestange (8) eingedreht ist.

9. Mundstück nach einem der vorgenannten Ansprüche,
**dadurch gekennzeichnet, dass** die Längen der an der Halteplatte (7) eingeschraubten Haltestangen (8) derart bemessen sind, dass die freien Enden (18) der Haltestangen (8) in einer Ebene verlaufen.

10. Mundstück nach einem der vorgenannten Ansprüche,
**dadurch gekennzeichnet, dass** die Haltestangen (8) und/oder die Halteplatte (7) aus einem metallischen, keramischen oder aus einem biegesteifen Werkstoff hergestellt sind.

## Claims

1. Extrusion die (1) for producing a moulded article (25) from a ceramic compound (10) in an extrusion process, the die (1) comprising a plurality of cavities (26) provided therein, consisting of
- an adapter plate (4) installed into a pressing channel (2),
- a retaining plate (7) secured to the adapter plate (4), and
- a plurality of retaining bars (8) mounted on the retaining plate (7), at the free end of which retaining bars (8) a core (20) for producing the cavities (26) in the moulded article (25) is located,
wherein the respective retaining bar (8) is secured to the retaining plate (7) by means of a screwed connection (12, 13) and the respective retaining bar (8) is provided with an anti-rotation device (14, 16, 17, 33, 34, 35), which locates the retaining bar (8) non-rotatably on the respective retaining bar (8) in the assembled state,
**characterised in that**
a groove (19) is worked into the free end (18) of the respective retaining bar (8), a lug (21) is integrally formed on a core (20), its external contour corresponding to the internal contour of the groove (10), and
in the assembled state, the core (20) is installed into the groove (10) by the lug (21) and non-rotationally held there.

2. Extrusion die (1) according to claim 1,
**characterised in that** a female thread (12) is worked into the respective retaining bar (8), **in that** a plurality of through-openings (11) for the accommodation of the retaining bars (8) is provided in the retaining plate (7), and **in that** a screw (13) tightened into the female thread (12) of the retaining bar (8) is inserted into each of the through-openings (11).

3. Extrusion die (1) according to claim 2,
**characterised in that** the through-opening (11) worked into the retaining plate (7) has a continuous annular contact surface (31), which is oriented perpendicular to the flow direction (9) of the ceramic compound (10), **in that** the free end (32) of the respective retaining bar (8) bears against the contact surface (31) of the through-opening (11) in the assembled state, and **in that** the retaining bar (8) is pressed against the contact surface (31) by the tightened screw (13).

4. Extrusion die (1) according to any of the preceding claims,
**characterised in that** a bore (16) extending perpendicular to the longitudinal axis (15) of the retaining bar (8) is worked into each retaining bar (8), and **in that** a cylindrical pin (17), which dips into a groove (14) worked into the retaining plate (7) in the assembled state and is non-rotatably held there, is inserted into each bore (16).

5. Extrusion die (1) according to any of claims 2 to 3,
**characterised in that** the region of the retaining bar (8) which is to be inserted into the through-opening (11) has an elliptical cross-section (33), **in that** the internal contour of the through-opening (11) is matched to the external contour of the sub-region of the retaining bar (8) with the elliptical cross-section (33), and **in that** the elliptical cross-section (33) of the retaining bar (8) is inserted into the through-opening (11) without play.

6. Extrusion die (1) according to any of claims 2 to 3,
**characterised in that** the sub-region of the retaining bar (8) which is to be inserted into the through-opening (11) has a square cross-section (34), **in that** the internal contour of the through-opening (11) is matched to the external contour of the sub-region of the retaining bar (8) with the square cross-section (34), and **in that** the square cross-section (34) of the retaining bar (8) is inserted into the through-opening (11) without play.

7. Extrusion die (1) according to any of claims 2 to 3,
**characterised in that** a groove extending parallel to the longitudinal axis (15) of the retaining bar (8) is worked into the sub-region of the retaining bar (8) which is to be inserted into the through-opening (11), **in that** a groove is worked into the internal wall of the through-opening (11), **in that** a tongue, for example in the form of a square pin, is inserted into the internal wall of the through-opening (11), and **in that** the retaining bar (8) is non-positively held and centred in the through-opening (11) by means of the tongue-and-groove pairing (35).

8. Extrusion die (1) according to claim 1,
**characterised in that** the respective core (20) has a through-opening (24), **in that** a female thread (22) is worked into the free end (18) of the retaining bar (8), and **in that** a screw (23) tightened into the female thread (22) of the retaining bar (8) passes through the through-opening (24) of the core (20).

9. Extrusion die according to any of the preceding claims,
**characterised in that** the lengths of the retaining bars (8) screwed into the retaining plate (7) are dimensioned such that the free ends (18) of the retaining bars (8) extend in one plane.

10. Extrusion die according to any of the preceding claims,
**characterised in that** the retaining bars (8) and/or the retaining plate (7) is/are made of a metallic, ceramic or rigid material.

## Revendications

1. Filière (1) pour la fabrication par extrusion d'une briquette (25) à partir d'une masse céramique (10), avec une multiplicité de cavités (26) prévues dans ladite briquette (25), composée
- d'une plaque avant (4) introduite dans un canal de pression (2),
- d'une plaque de fixation (7) fixée à la plaque avant (4) et
- d'une multiplicité de barres de fixation (8), installées sur la plaque de fixation (7), à l'extrémité libre (18) desquelles est disposé un noyau (20) pour la production des cavités (26) dans la briquette (25),
étant précisé que chaque barre de fixation (8) est arrêtée sur la plaque de fixation (7) à l'aide d'une liaison à vis (12, 13) et qu'il est prévu sur ladite barre de fixation (8) un dispositif de blocage en rotation (14, 16, 17, 33, 34, 35) grâce auquel la barre de fixation (8), à l'état monté, est bloquée fixe en rotation sur la plaque de fixation (7),
**caractérisée en ce qu'**une rainure (19) est réalisée sur l'extrémité libre (18) de chaque barre de fixation (8), **en ce qu'**il est prévu, rapportée sur un noyau (20), une saillie (21) dont le contour extérieur correspond au contour intérieur de la rainure (19), et **en ce qu'**à l'état monté, le noyau (20) est introduit avec la saillie (21) dans la rainure (19), et est fixé dans celle-ci, fixe en rotation.

2. Filière (1) selon la revendication 1,
**caractérisée en ce qu'**un filetage intérieur (12) est réalisé dans chaque barre de fixation (8), **en ce qu'**il est prévu dans la plaque de fixation (7) une multiplicité d'ouvertures de passage (11) pour recevoir les barres de fixation (8), et **en ce qu'**il est prévu, introduite dans chaque ouverture de passage (11), une vis (13) qui est vissée dans le filetage intérieur (12) de la barre de fixation (8).

3. Filière (1) selon la revendication 2,
**caractérisée en ce que** l'ouverture de passage (11) réalisée dans la plaque de fixation (7) présente une surface d'application périphérique annulaire (31) qui est orientée perpendiculairement au sens d'écoulement (9) de la masse céramique (10), **en ce que** l'extrémité libre (32) de chaque barre de fixation (8), à l'état monté, est appliquée contre la surface d'application (31) de l'ouverture de passage (11), et **en ce que** la barre de fixation (8) est pressée, grâce à la vis (13) vissée, contre la surface d'application (31).

4. Filière (1) selon l'une des revendications précédentes,
**caractérisée en ce que** dans chacune des barres de fixation (8) est réalisé un perçage (16) qui s'étend perpendiculairement à l'axe longitudinal (15) de ladite barre de fixation (8), et **en ce qu'**il est prévu, introduite dans chaque perçage (16), une tige cylindrique (17) qui, à l'état monté, pénètre dans une rainure (14) réalisée dans la plaque de fixation (7) et est fixée, fixe en rotation, dans ladite rainure (14).

5. Filière (1) selon l'une des revendications 2 à 3,
**caractérisée en ce que** la zone de la barre de fixation (8) à introduire dans l'ouverture de passage (11) présente une section transversale (33) de forme elliptique, **en ce que** le contour intérieur de l'ouverture de passage (11) est adapté au contour extérieur de la zone partielle de la coupe transversale elliptique (33) des barres de fixation (8), et **en ce que** la section transversale elliptique (33) des barres de fixation (8) est introduite sans jeu dans l'ouverture de passage (11).

6. Filière (1) selon l'une des revendications 2 à 3,
**caractérisée en ce que** la zone partielle de la barre de fixation (8) à introduire dans l'ouverture de passage (11) présente une section transversale carrée (34), **en ce que** le contour intérieur de l'ouverture de passage (11) est adapté au contour extérieur de la zone partielle de la section transversale carrée (34) des barres de fixation (8), et **en ce que** la section transversale carrée (34) des barres de fixation (8) est introduite sans jeu dans l'ouverture de passage (11).

7. Filière (1) selon l'une des revendications 2 à 3,
**caractérisée en ce que** dans la zone partielle de la barre de fixation (8) à introduire dans l'ouverture de passage (11) est réalisée une rainure qui s'étend parallèlement à l'axe longitudinal (15) de ladite barre de fixation (8), **en ce que** dans la paroi intérieure de l'ouverture de passage (11) est réalisée une rainure, **en ce que** dans les rainures des barres de fixation (8) et de l'ouverture de passage (11) est introduite une languette, par exemple sous la forme d'une tige carrée, et **en ce que** la barre de fixation (8) est montée dans l'ouverture de passage (11) par force, à l'aide de l'assemblage à languette et rainure (35), et de manière centrée.

8. Filière (1) selon la revendication 1,
**caractérisée en ce que** chaque noyau (20) présente une ouverture de passage (24), **en ce qu'**un filetage intérieur (22) est réalisé dans l'extrémité libre (18) de la barre de fixation (8), et **en ce que** l'ouverture de passage (24) du noyau (20) est traversée par une vis (23) qui est vissée dans le filetage intérieur (22) de la barre de fixation (8).

9. Filière (1) selon l'une des revendications précédentes,
**caractérisée en ce que** les longueurs des barres de fixation (8) vissées dans la plaque de fixation (7) sont calculées pour que les extrémités libres (18) desdites barres de fixation (8) s'étendent dans un même mplan.

10. Filière (1) selon l'une des revendications précédentes,
**caractérisée en ce que** les barres de fixation (8) et/ou la plaque de fixation (7) sont fabriquées à partir d'un matériau métallique, céramique ou d'un matériau rigide en flexion.
